# EUROPÄISCHE PATENTSCHRIFT

(11) **EP 3 119 166 B1**
(45) Veröffentlichungstag und Bekanntmachung des Hinweises auf die Patenterteilung: **27.02.2019**
(21) Anmeldenummer: 16178094.5
(22) Anmeldetag: 06.07.2016
(51) Int. Cl.: H05B 37/02

(54) **SYSTEM UND BETRIEBSGERÄT FÜR EINEN AKTOR**
SYSTEM AND OPERATING DEVICE FOR AN ACTUATOR
SYSTÈME ET APPAREIL DE COMMANDE D'ACTIONNEUR

(30) Priorität: 16.07.2015 DE 202015103737 U
(43) Veröffentlichungstag der Anmeldung: 18.01.2017
(73) Patentinhaber: Tridonic GmbH & Co KG, 6851 Dornbirn (AT)
(72) Erfinder: Auer, Hans, 6850 Dornbirn (AT); Dünser, Mathias, 6700 Bludenz (AT)
(74) Vertreter: Rupp, Christian

(56) Entgegenhaltungen:
- WO-A1-01/52607
- WO-A1-2010/071913
- WO-A1-2011/038438
- DE-A1-102007 055 164

## Beschreibung

Die Erfindung betrifft ein Betriebsgerät für zumindest einen Aktor, insbesondere ein Leuchtmittel, im Bereich der Gebäudetechnik. Dieses Betriebsgerät ist mit einer Zentraleinheit verbunden, um Steuersignale zu erhalten. Die Erfindung betrifft überdies ein System zum Konfigurieren und/oder Betreiben eines Betriebsgeräts, aufweisend eine Zentraleinheit und zumindest ein Betriebsgerät.

Die Betriebsgeräte sollen kostengünstig herstellbar sein und müssen einfach installierbar sein, um den Montageaufwand in der Gebäudetechnik auf ein Minimum zu beschränken. Insbesondere soll der Empfang von Steuersignalen von einer Zentraleinheit auf einfache Art und Weise erfolgen.

So wird in dem Dokument EP 1 202 613 B1 beschrieben, dass zum Steuern des Betriebsgeräts eine analoge Steuerspannung an das Betriebsgerät angelegt wird, um ein damit verbundenes Leuchtmittel zu dimmen.

Aus dem Dokument DE 10 2010 017 112 A1 ist bekannt, einen Aktor über verschiedene Steuerstellen anzusteuern.

Aus der Druckschrift US 2011/0316441 A1 ist indessen bekannt, ein Phasenanschnitts- oder Phasenabschnittssignal an das Betriebsgerät bereitzustellen, um ein an das Betriebsgerät angeschlossenes Leuchtmittel zu dimmen.

Somit sind die für die Betriebsgeräte verwendeten Schnittstellen allesamt unidirektional, sodass ein ordnungsgemäßer Empfang des Steuersignals von einer Zentraleinheit nicht durch das Betriebsgerät bestätigt werden kann. Dies führt dazu, dass auch ein nichtordnungsgemäß empfangenes Steuersignal unbestätigt bleibt. Insbesondere bei von dem Betriebsgerät örtlich entfernten Zentraleinheiten ist dies unerwünscht.

Die WO 2010/071913 A1 offenbart ein Beleuchtungssystem zur Ansteuerung von wenigstens zwei Leuchtmitteln, aufweisend wenigstens zwei verschiedene Leuchtmittel, ein Betriebsgerät zum Betreiben der Leuchtmittel, wobei das Betriebsgerät zumindest eine Schnittstelle aufweist; wobei abhängig von einem über die Schnittstelle zugeführten Signal die Leuchtmittel voneinander unterschiedlich angesteuert werden.

Die DE 10 2007 055164 A1 offenbart ein Betriebsgerät für mindestens ein Leuchtmittel, aufweisend eine physikalische Schnittstelle zum Anschluss eines Lichtsensors und zur Eingabe von Lichtsensor-Daten in einem ersten Modus, wobei diese Schnittstelle in einen zweiten Modus zur Ausgabe von Daten umschaltbar ist.

Es ist somit eine Aufgabe der hier vorliegenden Erfindung, ein Betriebsgerät bzw. ein System bereitzustellen, welches den Empfang eines Steuersignals von einer Zentraleinheit bestätigt oder welches mit einfachen Mitteln eine bidirektionale Schnittstelle mit einer Zentraleinheit bereitstellen kann. Dabei soll auf vorhandene unidirektionale Schnittstellen zurückgegriffen werden. Auf die Verwendung einer vergleichsweise aufwendigen Schnittstellentechnik, beispielsweise einer dem DALI-Standard entsprechende Schnittstelle, soll verzichtet werden.

Die gestellte Aufgabe wird insbesondere durch die im Patentanspruch 1 und im Patentanspruch 12 beschriebenen Merkmale gelöst. Vorteilhafte Ausgestaltungen sind in den jeweils abhängigen Ansprüchen beschrieben.

Insbesondere wird die Aufgabe durch ein Betriebsgerät für einen Aktor, bevorzugt ein Leuchtmittel, gelöst. Das Betriebsgerät weist eine erste Schnittstelle auf, die zum Empfang eines Steuersignals von einer Zentraleinheit eingerichtet ist, wobei das Steuersignal als Phasenanschnitts- oder Phasenabschnittssignal der Netzversorgungsspannung über eine Netzversorgungsleitung übertragen wird. Das Betriebsgerät weist eine zweite unabhängige Schnittstelle auf, mit Anschlüssen zum Anschließen der Zentraleinheit an die zweite Schnittstelle, wobei die zweite Schnittstelle dazu eingerichtet ist, ein analoges Steuersignal von der Zentraleinheit zu empfangen, wobei das analoge Steuersignal durch die Zentraleinheit eingestellt wird; und eine Steuereinrichtung, die dazu eingerichtet ist, einen Empfang eines Steuersignals über die erste Schnittstelle zu detektieren, und bei einem Empfang eines Steuersignals über die erste Schnittstelle einen Rückkanal zu bilden, indem eine Last der Anschlüsse der zweiten Schnittstelle gemäß einem definierten Protokoll moduliert wird, wobei die Zentraleinheit diese definierte Lastmodulation als Signalübertragung ausgehend von dem Betriebsgerät interpretiert, wobei die erste Schnittstelle eine unidirektionale Schnittstelle ist.

Als Aktor wird erfindungsgemäß jegliche Installation in der Gebäudetechnik gefasst. Bei elektrischen Installationssystemen können gleiche oder unterschiedliche Aktoren über beispielsweise ein Bussystem miteinander verbunden sein. Dabei ist einer Installation, beispielsweise einer Raumbeleuchtung, einer Jalousiesteuerung oder dergleichen, zumindest ein Aktor zugeordnet, der mittels des Betriebsgeräts ansteuerbar ist.

Unter dem Begriff Betriebsgerät wird dabei erfindungsgemäß beispielsweise ein elektronisches Vorschaltgerät für den Betrieb von elektrischen Leuchtmitteln, insbesondere Leuchtstofflampen oder Halogenglühlampen oder Leuchtdioden, gefasst.

Als Zentraleinheit wird erfindungsgemäß eine Einheit verstanden, die mit dem Betriebsgerät in einer Kommunikationsverbindung steht und Steuersignale generiert, um das Betriebsgerät zu steuern bzw. um den Aktor mittels des Betriebsgeräts zu steuern.

Erfindungsgemäß weist das Betriebsgerät zwei unabhängige Schnittstellen auf, wobei die erste Schnittstelle das Steuersignal als Phasenanschnitts- oder Phasenabschnittssignal der Netzversorgungsspannung über eine Netzversorgungsleitung empfängt. Dabei ist das Steuersignal entsprechend auf der Netzversorgungsleitung kodiert, sodass beispielsweise mittels einer definierten Sequenz unterschiedlicher Phasenanschnitte oder festgelegter Übertragungszeiten dem Betriebsgerät Steuersignals übermittelt werden. Dabei kann in vorteilhafter Weise auf zusätzliche Steuerleitungen verzichtet werden, um dieses Steuersignal zu übertragen. Um der Zentraleinheit nun mitzuteilen, dass das Steuersignal in dem Betriebsgerät über die erste Schnittstelle empfangen wurde, wird erfindungsgemäß vorgeschlagen, die Last an den Anschlüssen der zweiten Schnittstelle mittels des Betriebsgeräts zu modulieren, wenn ein Steuersignal über die erste Schnittstelle empfangen wird. Durch die Lastmodulation der Anschlüsse der zweiten Schnittstelle können der Zentraleinheit Informationen angezeigt werden. In einem einfachen Fall, wird mittels der Lastmodulation lediglich angezeigt, dass das Steuersignal empfangen wurde. Somit kann auf das Verlegen zusätzlicher Steuerleitungen verzichtet werden, der Montageaufwand für ein derartiges Betriebsgerät ist somit minimal. Zudem sind die Betriebsgeräte standardmäßig mit der ersten Schnittstelle und/oder der zweiten Schnittstelle ausgestattet.

Die Lastmodulation kann eine Strom- und/oder Spannungsmodulation sein.

Die erste Schnittstelle ist eine unidirektionale Schnittstelle. Bevorzugt ist auch die zweite Schnittstelle eine unidirektionale Schnittstelle. Beide Schnittstellen sind dabei derart konfiguriert, dass sie ein Steuersignal von der Zentraleinheit im Betriebsgerät empfangen. Unter einer unidirektionalen Schnittstelle wird verstanden, dass die Kommunikation zwischen Betriebsgerät und Zentraleinheit nicht bidirektional, also nicht zweiseitig, stattfindet, sondern dass die Zentraleinheit an das Betriebsgerät sendet, ohne dass das Betriebsgerät darüber informiert, ob das Steuersignal korrekt empfangen wurde. Problematisch bei dieser unidirektionalen Schnittstelle ist, dass ein Empfang eines Steuersignals nicht von der gleichen Schnittstelle bestätigt werden kann. Daher ist erfindungsgemäß vorgesehen, eine zweite Schnittstelle entsprechend zu konfigurieren, um eine Lastmodulation zu ermöglichen, sodass Informationen an die Zentraleinheit zurückübertragen werden können.

In einer bevorzugten Ausgestaltung bildet die Lastmodulation der zweiten Schnittstelle einen Rückkanal der ersten Schnittstelle. Somit ist eine bidirektionale Kommunikation zwischen dem Betriebsgerät und der Zentraleinheit ermöglicht, wobei der Vorwärtskanal der bidirektionalen Verbindung über die erste Schnittstelle und insbesondere über ein Phasenanschnitts- oder Phasenabschnittssignal der Netzversorgungspannung über eine Netzversorgungsleitung erfolgt. Der Rückkanal wird über die zweite Schnittstelle und insbesondere über die Lastmodulation der zweiten Schnittstelle gebildet.

In einer bevorzugten Ausgestaltung weist das Steuersignal von der Zentraleinheit zumindest einen Betriebsparameter zum Einstellen des Betriebsgeräts auf. Als Betriebsparameter sind beispielsweise einzustellende Spannungen und/oder Ströme und/oder Temperaturkurven und/oder Farbverläufe und/oder Abschaltbedingungen, die zum Betrieb des Aktors notwendig sind, zu verstehen. Der Empfang des Betriebsparameters wird nunmehr erfindungsgemäß durch eine Lastmodulation der zweiten Schnittstelle bestätigt. Auf diese Art ist eine Konfiguration des Betriebsgeräts sehr einfach möglich, da durch zwei unidirektionale Schnittstellen eine bidirektionale Kommunikation zwischen dem Betriebsgerät und der Zentraleinheit ermöglicht wird.

Alternativ oder zusätzlich weist das Steuersignal der Zentraleinheit zumindest einen Programmierparameter zum Programmieren des Betriebsgeräts auf. Dies ist insbesondere in einer Initialisierungs- oder Installationsphase des Betriebsgeräts bzw. des Gebäudesystems vorteilhaft, um auf einfache Weise ein Betriebsgerät zu programmieren und dabei erfindungsgemäß ein Rückkanal mittels Lastmodulation zu bilden.

Alternativ oder zusätzlich weist das Steuersignal der Zentraleinheit bevorzugt zumindest einen Dimmbefehl zum Einstellen der Helligkeit des an das Betriebsgerät angeschlossenen Leuchtmittels als Aktor auf. Somit kann auch während einer Betriebsphase des Betriebsgeräts ein Bestätigungssignal an die Zentraleinheit gesendet werden.

In einer bevorzugten Ausgestaltung ist das analoge Steuersignal der zweiten Schnittstelle mittels eines Potentiometers eingestellt. Durch Einstellen des analogen Steuersignals durch die Zentraleinheit wird dem Betriebsgerät ein Steuersignal über die zweite Schnittstelle bereitgestellt.

Bevorzugt wird das Steuersignal der zweiten Schnittstelle mittels eines getakteten Transformators erfasst, wobei der Takt des Transformators moduliert wird, um die Lastmodulation an den Anschlüssen der zweiten Schnittstelle bereitzustellen. Damit kann mit der zweiten Schnittstelle auch ein Vorwärtskanal von der Zentraleinheit zum Betriebsgerät aufgebaut werden. Wird diese Schnittstelle beispielsweise mittels eines Potentiometers betrieben, so kann der aktuelle Potentiometer-Widerstandswert intern in dem Betriebsgerät dadurch erfasst werden, dass ein interner Transformator im Betriebsgerät definiert getaktet wird, sodass die Ausgangsspannung des Transformators dann die eingangsseitige Belastung des getakteten Transformators durch das Potentiometer wiedergibt. Bevorzugt kann nun diese Taktung des Transformators definiert moduliert werden, sodass diese Modulation der Taktung an den Anschlüssen, die für das Potentiometer vorgesehen sind, ausgelesen werden und so den Rückkanal der bidirektionalen Verbindung zwischen Betriebsgerät und Zentraleinheit bilden. Die Lastmodulation wird sodann von der Zentraleinheit detektiert und entsprechend ausgewertet.

Bevorzugt wird die Lastmodulation dazu verwendet, um von der zweiten Schnittstelle zur Zentraleinheit Daten zu übertragen. Darüber hinaus kann die zweite Schnittstelle auch weiterhin als Vorwärtskanal verwendet werden, um ein analoges Steuersignal an das Betriebsgerät bereitzustellen.

In einer bevorzugten Ausgestaltung wird die erste Schnittstelle mit einer höheren Priorität ausgewertet als die zweite Schnittstelle. Somit kann bei Empfang des Steuersignals über die erste Schnittstelle die zweite Schnittstelle für den Empfang von Steuersignalen deaktiviert werden und als Rückkanal verwendet werden. Damit kann bei Empfang eines Steuersignals über die erste Schnittstelle sofort eine Lastmodulation an der zweiten Schnittstelle bereitgestellt werden, um einer Zentraleinheit Daten zu übertragen oder ein ordnungsgemäßen Erhalt des Steuersignals zu bestätigen.

In einer bevorzugten Ausgestaltung werden Daten betreffend das Steuersignal im Betriebsgerät geprüft und mittels der Lastmodulation an den Anschlüssen der zweiten Schnittstelle bestätigt und/oder zurückübertragen. Die Daten sind beispielsweise eine Prüfsumme, ein Speicherkommando oder ein zu bestätigender Betriebsparameter. Somit wird die Steuersignal-Übertragung sicherer und zuverlässiger.

In einer bevorzugten Ausgestaltung ist die zweite Schnittstelle eine Digitale-Serielle Schnittstelle, englisch digital-serial-interface, kurz DSI, bevorzugt eine 1 bis 10 Volt Schnittstelle. Eine DSI im Bereich der Leuchtmittelansteuerung ist eine unidirektionale Schnittstelle, welche ohne Adressierung des Betriebsgeräts funktioniert. Dies vereinfacht die Kosten für die Installation eines derartigen Betriebsgeräts und macht es somit einfacher austauschbar, beispielsweise bei Defekt oder Aktualisierungen. Durch die Lastmodulation der zweiten Schnittstelle ist nunmehr ein Rückkanal ermöglicht.

Bevorzugt ist die zweite Schnittstelle potentialgetrennt von der ersten Schnittstelle. Da die erste Schnittstelle ein Phasenanschnitts- bzw. Phasenabschnittssignal der Netzversorgungsspannung mittels der Netzleitung überträgt, ist aus Sicherheitsgründen eine Potentialtrennung zwischen den beiden Schnittstellen gefordert.

In einem weiteren Aspekt der Erfindung ist ein System zum Konfigurieren und/oder Betreiben eines Betriebsgeräts gemäß der vorhergehenden Art bereitgestellt. Das System weist eine Zentraleinheit und zumindest ein Betriebsgerät gemäß der vorhergehenden Art auf, an dem ein Aktor, bevorzugt ein Leuchtmittel, angeschlossen ist, wobei das Betriebsgerät mit der Zentraleinheit verbunden ist. Bevorzugt steuert die Zentraleinheit eine Vielzahl von Betriebsgeräten. Dabei können die Betriebsgeräte eine gleiche Art von Aktoren oder unterschiedliche Aktoren in dem System steuern. Als Aktor ist insbesondere ein Leuchtmittel vorgesehen, beispielsweise eine Leuchtdiode, die mittels der Zentraleinheit in ihrer Helligkeit gesteuert wird. Alternativ wird die Zentraleinheit das Betriebsgerät programmieren und/oder in einer Initialisierungsphase konfigurieren.

Bevorzugt sendet die Zentraleinheit mittels einer ersten Schnittstelle ein Steuersignal als Phasenanschnitts- oder Phasenabschnittssignal der Netzversorgungsspannung über eine Netzversorgungsleitung an das zumindest eine Betriebsgerät. Die Zentraleinheit ist eingerichtet, lastmodulierte Anschlüsse einer zweiten Schnittstelle auszuwerten. Dies ermöglicht das Bilden einer bidirektionalen Verbindung zwischen einer Zentraleinheit und dem zumindest einen Betriebsgerät, um den Erhalt eines Steuersignals zu bestätigen.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.
- Fig. 1: ein erstes Ausführungsbeispiel eines erfindungsgemäßen Betriebsgeräts;
- Fig. 2: ein zweites Ausführungsbeispiel eines erfindungsgemäßen Betriebsgeräts;
- Fig. 3: ein erstes Ausführungsbeispiel eines erfindungsgemäßen Systems bestehend aus einer Zentraleinheit und einem Betriebsgerät;
- Fig. 4: ein zweites Ausführungsbeispiel eines erfindungsgemäßen Systems bestehend aus einer Zentraleinheit und mehreren Betriebsgeräten;
- Fig. 5: ein Ablaufschema zur erfindungsgemäßen bidirektionalen Kommunikation zwischen Zentraleinheit und Betriebsgerät;
- Fig. 6a-c: drei beispielhafte Signalverläufe für einen Rückkanal über die zweiten Schnittstelle.

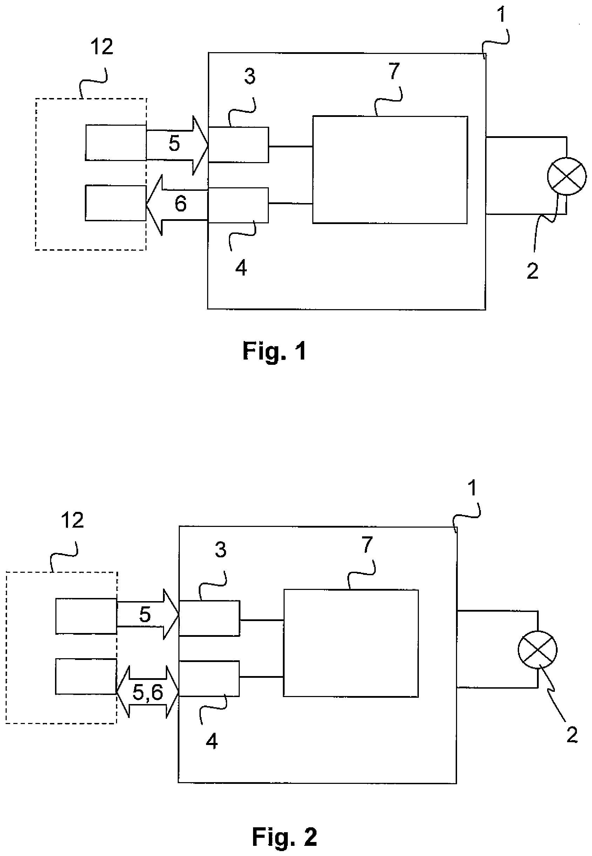

Die Fig. 1 zeigt ein erstes Ausführungsbeispiel eines erfindungsgemäßen Betriebsgeräts 1. Das Betriebsgerät 1 ist eingerichtet, um ein Leuchtmittel 2 als Beispiel für einen Aktor im Bereich der Gebäudetechnik zu steuern. Das Betriebsgerät 1 ist mit einer Zentraleinheit 12 verbunden, um Steuersignale 5 zu erhalten. Das erfindungsgemäße Betriebsgerät 1 weist dazu eine erste unidirektionale Schnittstelle 3 auf, um das Steuersignal 5 von der Zentraleinheit 12 zu erhalten.

Die erste Schnittstelle 3 ist dabei die Netzversorgungsleitung, beispielsweise zum Bereitstellen einer Netzspannung, insbesondere einer Spannung in Höhe von 230 Volt. Andere Netzspannungen sind vom Erfindungsgedanken nicht ausgeschlossen.

Über die erste Schnittstelle 3 wird somit eine Versorgungsspannung für den Aktor, hier als Leuchtmittel 2 dargestellt, bereitgestellt. Um nun von einer Zentraleinheit 12 auch Steuersignale 5 über die erste Schnittstelle 3 mittels der Netzversorgungsleitung zu übertragen, ist ein definierter Phasenanschnitt und/oder Phasenabschnitt vorgesehen. Eine derartige Schnittstelle wird beispielsweise als "ready to mains" Schnittstelle bezeichnet. Das Betriebsgerät 1 wertet den definierten Phasenanschnitt bzw. Phasenabschnitt der Netzspannung als Steuersignal 5 aus. Auf diese Weise können ohne zusätzliche Leitungen zu benötigen, beispielsweise Dimmbefehle, Betriebsparameter oder Programmierparameter übertragen werden. Problematisch an der ersten Schnittstelle 3 ist der unidirektionale Charakter, sodass bislang ein erfolgreiches Erhalten des Steuersignals 5 nicht durch das Betriebsgerät 1 bestätigt werden kann.

Erfindungsgemäß ist nun eine zweite Schnittstelle 4 vorgesehen. Mittels dieser zweiten Schnittstelle 4 wird ein Rückkanal 6 gebildet, um beispielsweise die Bestätigung des Empfangs eines Steuersignals 5 über erste Schnittstelle 3 zu ermöglichen. Dabei wird in einer Steuereinheit 7 des Betriebsgeräts 1 der Empfang eines Steuersignals 5 über die erste Schnittstelle 3 detektiert und bei ordnungsgemäßem Empfang des Steuersignals 5 über den Rückkanal 6 mittels der zweiten Schnittstelle 4 ein analoges Rücksignal zur Zentraleinheit 12 erhalten. Dabei werden durch das Betriebsgerät 1 die Anschlüsse der zweiten Schnittstelle 4 lastmoduliert, um beispielsweise einer Zentraleinheit 12 den ordnungsgemäßen Empfang des Steuersignals 5 zu bestätigen und/oder Informationen bereitzustellen.

In der Fig. 2 ist ein zweites Ausführungsbeispiel eines erfindungsgemäßen Betriebsgeräts 1 dargestellt. Im einzigen Unterschied zu Fig. 1 ist die zweite Schnittstelle 4 als eine bidirektionale Schnittstelle ausgebildet. Somit kann über die zweite Schnittstelle 4 ebenfalls ein Steuersignal 5 an das Betriebsgerät 1 gesendet werden. Die zweite Schnittstelle 4 ist prinzipiell ebenfalls eine unidirektionale Schnittstelle und wird mittels der erfindungsgemäßen Lastmodulation zu einer bidirektionalen Schnittstelle ausgebildet.

Die Steuereinheit 7 ist dabei vorgesehen, um die Schnittstellen 3, 4 zu priorisieren. Wird ein Steuersignal 5 an der ersten Schnittstelle 3 detektiert, wird die zweite Schnittstelle 4 für das Empfangen eines Steuersignals 5 deaktiviert und für das Lastmodulieren aktiviert.

Die zweite Schnittstelle 4 ist bevorzugt eine DSI, beispielsweise eine 1-bis-10-Volt-Schnittstelle. Eine 1-bis-10-Volt-Schnittstelle ist dazu ausgelegt, beispielsweise Dimmbefehle von der Zentraleinheit 12 oder von einem anderen Betätigungselement zu erhalten. Mit einer derartigen Lichtsteuerung lässt sich das Leuchtmittel stufenlos dimmen. Damit kann auf das aufwendige Installieren einer DALI-standardisierten Schnittstelle verzichtet werden. Mit einer 1-bis-10-Volt-Schnittstelle 4 wird die Beleuchtungsinstallation individualisiert und die Montagekosten reduziert. Die Einstellung erfolgt mittels Potentiometers 8 in der Zentraleinheit 12, welche ein Steuersignal 5 mittels einer Steuerleitung bereitstellt. Die Steuerung erfolgt insbesondere über ein störungssicheres Gleichspannungssignal von 10 Volt, wobei 10 Volt die maximale Helligkeit bedeuten. Bei 10 Volt ist eine Steuerleitung dieser Schnittstelle 4 hochohmig. Die minimale Helligkeit entspricht einem Spannungswert von 1 Volt. Dazu ist die Steuerleitung kurzgeschlossen. Diese analoge Steuerspannung variiert somit zwischen 1 Volt und 10 Volt. Alternativ kann auch eine Spannung von minus 10 Volt anstelle einer Spannung von plus 10 Volt verwendet werden.

Erfindungsgemäß wird nun ein Rückkanal 6 gebildet, indem die Last an den Anschlüssen dieser zweiten Schnittstelle 4 im Betriebsgerät 1 gemäß einem definierten Protokoll moduliert werden und die mit dem Betriebsgerät 1 verbundene Zentraleinheit 12 die definierte Lastmodulation als Signalübertragung ausgehend von dem Betriebsgerät 1 interpretiert.

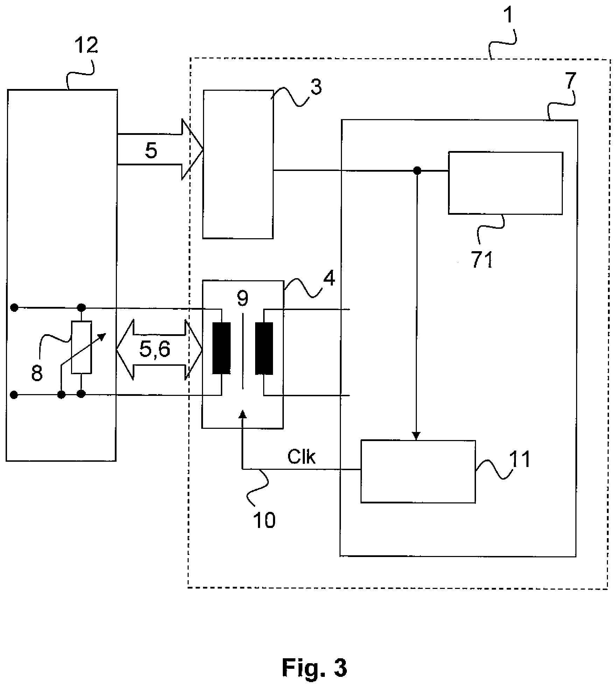

In Fig. 3 ist ein erstes Ausführungsbeispiel eines erfindungsgemäßen Systems bestehend aus einer Zentraleinheit 12 und einem Betriebsgerät 1 dargestellt. Dabei ist insbesondere eine detailliertere Darstellung der zweiten Schnittstelle 4 gezeigt. Die zweite Schnittstelle 4 umfasst betriebsgeräteseitig einen Transformator 9. Der Transformator 9 ist primärseitig mit der Zentraleinheit 12 verbunden. In der Zentraleinheit 12 ist die zweite Schnittstelle 4 mit einem Potentiometer 8 ausgestattet. In Abhängigkeit der eingestellten Potentiometer-Widerstandswerte wird eine analoge Steuerspannung an das Betriebsgerät 1 angeschaltet. Diese analoge Steuerspannung variiert zwischen 1 Volt und 10 Volt. Der interne Transformator 9 im Betriebsgerät 1 wird mittels eines Taktsignals 10 gesteuert. Durch die definierte Taktung 10 des internen Transformators 9 wird der aktuelle Potentiometer-Widerstandswert der Zentraleinheit 12 erfasst. Die Ausgangsspannung des internen Transformators 9 an der Sekundärseite gibt sodann die eingangsseitige Belastung des Transformators 9 durch das Potentiometer 8 wieder. Erfindungsgemäß wird nun die Taktung 10 des Transformators 9 definiert moduliert, sodass die Modulation der Taktung 10 an den Anschlüssen der zweiten Schnittstelle 4 in der Zentraleinheit 12 ausgelesen wird. Somit ist ein Rückkanal 6 gebildet.

Das Betriebsgerät 1 umfasst zum Bilden des Rückkanals 6 insbesondere eine Steuereinheit 7. Die Steuereinheit 7 ist zunächst eingerichtet, um den Empfang eines Steuersignals 5 über die erste Schnittstelle 3 zu detektieren. Zum vereinfachten Detektieren ist beispielsweise eine höhere Priorisierung der ersten Schnittstelle 3 gegenüber der zweiten Schnittstelle 4 vorgesehen. Sobald ein Steuersignal 5 mittels der Steuereinheit 7 über die erste Schnittstelle 3 detektiert worden ist, wird die zweite Schnittstelle 4 für den Empfang von Steuersignalen 5 deaktiviert. Ein Modulator 11 ist in dem Betriebsgerät 1 zum Lastmodulieren der Anschlüsse der zweiten Schnittstelle 4 vorgesehen. Dieser Modulator 11 stellt dem Transformator 9 einen definierten Takt zur Verfügung, um eine Lastmodulation an der zweiten Schnittstelle 4 zu bewirken.

Weiterhin ist in Fig. 3 eine Ansteuerschaltung 71 dargestellt. Mit dieser Ansteuerschaltung kann der Aktor, beispielsweise eine Leuchtdiode, betrieben werden. Die Ansteuerschaltung 71 ist bevorzugt ein Konverter, beispielsweise ein Hochsetzsteller oder ein Tiefsetzsteller.

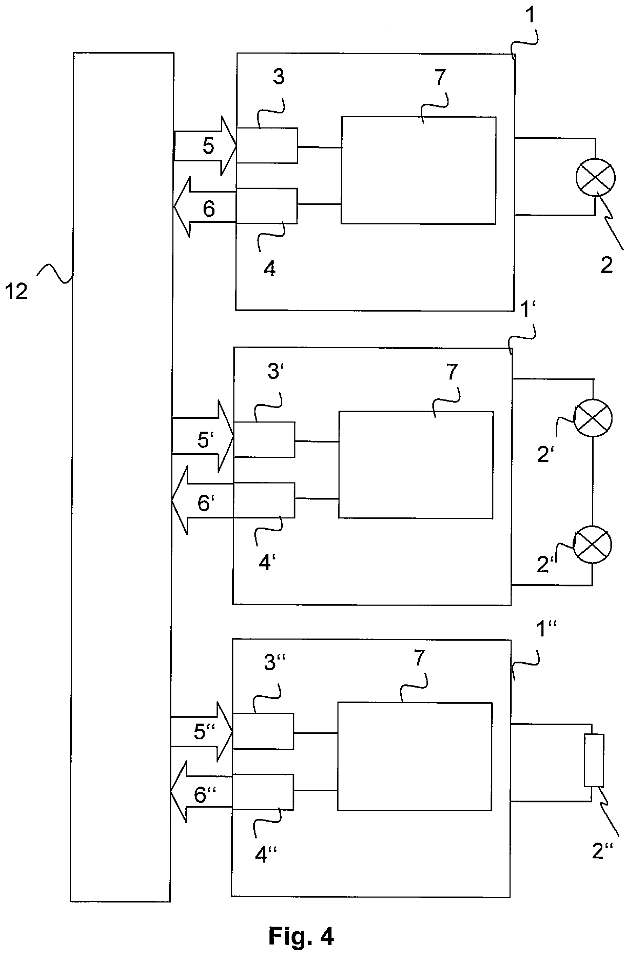

In Fig. 4 ist ein zweites Ausführungsbeispiel eines erfindungsgemäßen Systems bestehend aus einer Zentraleinheit 12 und drei Betriebsgeräten 1, 1' und 1" dargestellt. Die Betriebsgeräte 1, l'und 1" entsprechen dem Betriebsgerät 1 gemäß Fig. 1 oder Fig. 2. Alternativ zum Betriebsgerät 1 ist das Betriebsgerät 1' gemäß Fig. 4 dazu vorgesehen, zwei Leuchtmittel 2' anzusteuern. Ein weiteres Betriebsgerät 1" ist gemäß Fig. 4 vorgesehen, um einen Aktor 2" anzusteuern. Als Aktor ist insbesondere eine Installation in einem Gebäude, beispielsweise eine Jalousienansteuerung, gemeint. Die Anzahl der Betriebsgeräte 1 ist nicht auf drei beschränkt, insbesondere kann eine Vielzahl von Betriebsgeräten 1 mittels der Zentraleinheit 12 gesteuert werden.

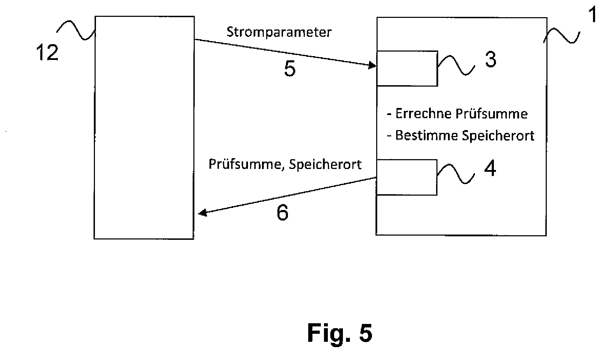

In Fig. 5 ist ein beispielhafter Protokoll-Ablauf zwischen der Zentraleinheit 12 und dem Betriebsgerät 1 dargestellt. Dabei werden Stromparameter als Steuersignal 5 von der Zentraleinheit 12 an das Betriebsgerät 1 über die unidirektionale Schnittstelle 3 gesendet. Das Steuersignal 5 umfasst dabei beispielsweise 16-bit Daten. Das Betriebsgerät 1 detektiert den Empfang des Steuersignals 5. Das Steuersignal 5 wird im Rahmen eines definierten Phasenanschnitt- bzw. Phasenabschnittsignals der Netzspannung übertragen. In dem Betriebsgerät 1 wird eine Auswertung der Netzspannung vorgenommen und somit das Steuersignal 5 erhalten. Sodann erfolgt eine Überprüfung des im Steuersignal 5 enthaltenen 16-bit großen Datensignals. Es wird über dieses Steuersignal 5 eine Prüfsumme gebildet und ggf. ein Speicherort für den Stromparameter detektiert. Die Prüfsumme und der Speicherort werden mittels lastmodulierten Anschlüssen der zweiten Schnittstelle 4 an die Zentraleinheit 12 zurückübertragen, um den ordnungsgemäßen Empfang des Steuersignals 5 zu bestätigen.

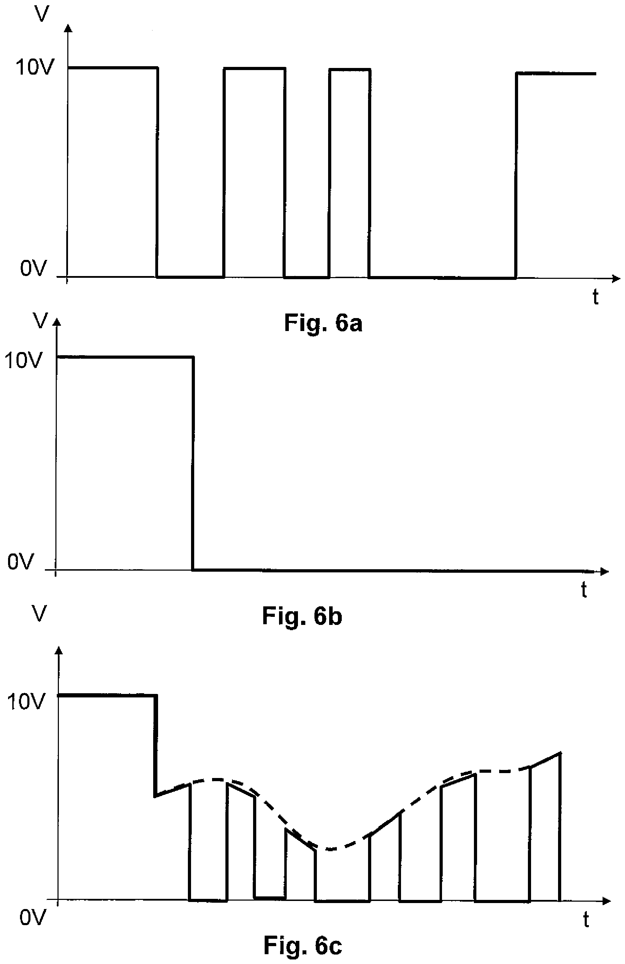

In Fig. 6a bis Fig. 6c sind drei beispielhafte Signalzeitverlauf einer Steuerspannung der unidirektionalen zweiten Schnittstelle 4 dargestellt. Dabei ist jeweils der Spannungsverlauf V von 0 Volt bis 10 Volt als analoges Steuersignal über die Zeit t dargestellt. Zur Übertragung werden jeweils die Anschlüsse der zweiten Schnittstelle 4 durch einen Modulator 11 in dem Betriebsgerät 1 lastmoduliert. Wird nun die Taktung eines internen Transformators 9 entsprechend variiert, beispielsweise durch Vorgaben eines Protokolls, so wird eine Lastmodulation an der zweiten Schnittstelle 4 erwirkt, welche in der Zentraleinheit 12 detektiert wird. Somit ist eine bidirektionale Verbindung zwischen der Zentraleinheit 12 und dem Betriebsgerät 1 erhalten.

Gemäß Fig. 6a wird die zweite Schnittstelle 4 als serielle UART Schnittstelle zum Bilden des Rückkanals 7 ausgestaltet. Dabei können beispielsweise mittels einer Manchester-Codierung Daten von dem Betriebsgerät 1 an die Zentraleinheit 12 übertragen werden. Alternative Codierungen zur verlustarmen Übertragung von Daten können ebenfalls angewendet werden.

Gemäß Fig. 6b wird lediglich ein 1-bit Informationswort an die Zentraleinheit 12 zurückübertragen, beispielsweise um den ordnungsgemäßen Empfang eines Steuersignals 5 zu bestätigen.

Gemäß Fig. 6c erfolgt das Bilden des Rückkanals 7 bei laufendem Betrieb der unidirektionalen zweiten Schnittstelle 4. Somit wird im Vorwärtskanal der zweiten Schnittstelle 4 ein analoges Steuersignal (gestrichelte Darstellung) an das Betriebsgerät 1 übertragen. Im Rückkanal (getaktetes Signal) erfolgt das Übertragen von Informationen mittels der Lastmodulation, die in der Zentraleinheit 12 ausgewertet wird.

Alle gezeigten, beanspruchten oder beschriebenen Merkmale können miteinander kombiniert werden.

### Bezugszeichenliste

- 1: Betriebsgerät
- 2: Leuchtmittel
- 3: erste Schnittstelle
- 4: zweite Schnittstelle
- 5: Steuersignal
- 6: Rückkanal
- 7: Steuereinheit
71 Ansteuerschaltung für Aktor
- 8: Potentiometer
- 9: Transformator
- 10: Taktsignal
- 11: Modulator
- 12: Zentraleinheit

## Patentansprüche

1. Betriebsgerät (1) für einen Aktor, bevorzugt ein Leuchtmittel (2), aufweisend:
- eine erste Schnittstelle (3), die dazu eingerichtet ist, ein Steuersignal (5) als Phasenanschnitts- oder Phasenabschnittssignal der Netzversorgungsspannung über eine Netzversorgungsleitung von einer Zentraleinheit (12) zu empfangen;
- eine zweite unabhängige Schnittstelle (4) mit Anschlüssen zum Anschließen der Zentraleinheit (12) an die zweite Schnittstelle (4), wobei die zweite Schnittstelle (4) dazu eingerichtet ist, ein analoges Steuersignal von der Zentraleinheit (12) zu empfangen, wobei das analoge Steuersignal durch die Zentraleinheit (12) eingestellt wird; und
- eine Steuereinrichtung (7), die dazu eingerichtet ist, einen Empfang eines Steuersignals (5) über die erste Schnittstelle (3) zu detektieren, und bei einem Empfang eines Steuersignals (5) über die erste Schnittstelle (3) einen Rückkanal (6) zu bilden, indem eine Last der Anschlüsse der zweiten Schnittstelle (4) gemäß einem definierten Protokoll moduliert wird, wobei die Zentraleinheit (12) diese definierte Lastmodulation als Signalübertragung ausgehend von dem Betriebsgerät (1) interpretiert, wobei die erste Schnittstelle (3) eine unidirektionale Schnittstelle ist.

2. Betriebsgerät nach einem der vorhergehenden Ansprüche,
wobei die Lastmodulation der zweiten Schnittstelle (4) den Rückkanal (6) der ersten Schnittstelle (3) bildet, sodass die zweite Schnittstelle (4) durch die Lastmodulation eine bidirektionale Schnittstelle ist.

3. Betriebsgerät nach einem der vorhergehenden Ansprüche,
wobei das Steuersignal (5) an der ersten Schnittstelle (3) der Zentraleinheit (12) zumindest einen Betriebsparameter zum Einstellen des Betriebsgeräts (1) aufweist.

4. Betriebsgerät nach einem der vorhergehenden Ansprüche,
wobei das Steuersignal (5) an der ersten Schnittstelle (3) der Zentraleinheit (12) zumindest einen Programmierparameter zum Programmieren des Betriebsgeräts (1) aufweist.

5. Betriebsgerät nach einem der vorhergehenden Ansprüche,
wobei das Steuersignal (5) an der ersten Schnittstelle (3) der Zentraleinheit (12) zumindest einen Dimmbefehl zum Einstellen der Helligkeit des an das Betriebsgerät (1) angeschlossenen Leuchtmittels (2) aufweist.

6. Betriebsgerät nach einem der vorhergehenden Ansprüche,
wobei das analoge Steuersignal an der zweiten Schnittstelle (4) mittels Potentiometer (8) der Zentraleinheit (12) eingestellt wird.

7. Betriebsgerät nach einem der vorhergehenden Ansprüche,
wobei das analoge Steuersignal der zweiten Schnittstelle (4) mittels eines getakteten Transformators (9) erfasst wird und wobei das Taktsignal (10) moduliert wird, um die definierte Lastmodulation an den Anschlüssen der zweiten Schnittstelle (4) bereitzustellen.

8. Betriebsgerät nach Anspruch 7,
wobei durch die Modulation des Taktsignals (10) eine Datenübertragung von der zweiten Schnittstelle (4) zur Zentraleinheit (12) erhalten wird.

9. Betriebsgerät nach einem der vorhergehenden Ansprüche,
wobei die erste Schnittstelle (3) mit einer höheren Priorität ausgewertet wird als die zweite Schnittstelle (4).

10. Betriebsgerät nach einem der vorhergehenden Ansprüche,
wobei Daten betreffend des Steuersignals (5) an der ersten Schnittstelle (3) im Betriebsgerät geprüft werden und mittels der definierten Lastmodulation an den Anschlüssen der zweiten Schnittstelle bestätigt werden.

11. Betriebsgerät nach einem der vorhergehenden Ansprüche,
wobei die zweite Schnittstelle (4) potenzialgetrennt von der ersten Schnittstelle (3) ist.

12. System zum Konfigurieren und/oder Betreiben eines Betriebsgeräts gemäß einem der vorhergehenden Ansprüche aufweisend die Zentraleinheit (12) und zumindest das Betriebsgerät (1) gemäß einem der vorhergehenden Ansprüche an dem ein Aktor, bevorzugt ein Leuchtmittel (2), angeschlossen ist, wobei das Betriebsgerät (1) mit der Zentraleinheit (12) verbunden ist.

13. System nach Anspruch 12,
wobei die Zentraleinheit (12) eine Vielzahl von Betriebsgeräten (1, 1', 1") gemäß einem der Ansprüche 1 bis 11 steuert.

14. System nach Anspruch 13,
wobei die Zentraleinheit (12) ein Steuersignal (5) als Phasenanschnitts- oder Phasenabschnittssignal der Netzversorgungsspannung über eine Netzversorgungsleitung an der ersten Schnittstelle (3, 3', 3") des zumindest einen Betriebsgerät (1, 1', 1") sendet, und
wobei die Zentraleinheit (12) eingerichtet ist, die definierten lastmodulierten Anschlüsse der zweiten Schnittstelle (4, 4', 4") des jeweiligen Betriebsgerätes (1, 1', 1") auszuwerten.

## Claims

1. Operating device (1) for an actuator, preferably a lighting means (2), comprising:
- a first interface (3), which is configured to receive a control signal (5) as a phase control or reverse phase control signal of the power supply voltage from a central unit (12) via a power supply line;
- a second independent interface (4) having terminals for connecting the central unit (12) to the second interface (4), wherein the second interface (4) is configured to receive an analog control signal from the central unit (12), wherein the analog control signal is set by the central unit (12); and
- a control device (7), which is configured to detect a reception of a control signal (5) via the first interface (3) and, upon a reception of a control signal (5) via the first interface (3), create a return channel (6) by modulating a load of the terminals of the second interface (4) according to a defined protocol, wherein the central unit (12) interprets said defined load modulation as a signal transmission originating from the operating device (1), wherein the first interface (3) is a unidirectional interface.

2. Operating device according to any one of the preceding claims,
wherein the load modulation of the second interface (4) forms the return channel (6) of the first interface (3), so that the second interface (4) is a bidirectional interface as a result of the load modulation.

3. Operating device according to any one of the preceding claims,
wherein the control signal (5) at the first interface (3) of the central unit (12) comprises at least one operating parameter for setting the operating device (1).

4. Operating device according to any one of the preceding claims,
wherein the control signal (5) at the first interface (3) of the central unit (12) comprises at least one programming parameter for programming the operating device (1).

5. Operating device according to any one of the preceding claims,
wherein the control signal (5) at the first interface (3) of the central unit (12) comprises at least one dimming command for setting the brightness of the lighting means (2) connected to the operating device (1).

6. Operating device according to any one of the preceding claims,
wherein the analog control signal at the second interface (4) is set via potentiometers (8) of the central unit (12).

7. Operating device according to any one of the preceding claims,
wherein the analog control signal of the second interface (4) is acquired using a clocked transformer (9), and wherein the clock signal (10) is modulated to provide the defined load modulation at the terminals of the second interface (4).

8. Operating device according to Claim 7,
wherein a data transmission from the second interface (4) to the central unit (12) is obtained by modulating the clock signal (10) .

9. Operating device according to any one of the preceding claims,
wherein the first interface (3) is evaluated with a higher priority than the second interface (4).

10. Operating device according to any one of the preceding claims,
wherein data relating to the control signal (5) is checked at the first interface (3) in the operating device and confirmed by means of the defined load modulation at the terminals of the second interface.

11. Operating device according to any one of the preceding claims,
wherein the second interface (4) is galvanically isolated from the first interface (3).

12. System for configuring and/or operating an operating device according to any one of the preceding claims comprising the central unit (12) and at least the operating device (1) according to any one of the preceding claims, to which an actuator, preferably a lighting means (2), is connected, wherein the operating device (1) is connected to the central unit (12).

13. System according to Claim 12,
wherein the central unit (12) controls a plurality of operating devices (1, 1', 1") according to any one of Claims 1 to 11.

14. System according to Claim 13,
wherein the central unit (12) transmits a control signal (5) as a phase control or reverse phase control signal of the power supply voltage to the first interface (3, 3', 3") of the at least one operating device (1, 1', 1") via a power supply line, and
wherein the central unit (12) is configured to evaluate the defined load-modulated terminals of the second interface (4, 4', 4") of the respective operating device (1, 1', 1").

## Revendications

1. Appareil de commande (1) pour un actionneur, de préférence un moyen d'éclairage (2), présentant :
- une première interface (3), qui est destinée à recevoir un signal de commande (5) provenant d'une unité centrale (12), sous forme de signal de déphasage en début ou en fin de cycle de la tension d'alimentation du réseau par le biais d'une conduite d'alimentation secteur ;
- une deuxième interface (4) indépendante, dotée de bornes pour le raccordement de l'unité centrale (12) à la deuxième interface (4), la deuxième interface (4) étant destinée à recevoir un signal de commande analogique provenant de l'unité centrale (12), le signal de commande analogique étant réglé par l'unité centrale (12) ; et
- un dispositif de commande (7), qui est destiné à détecter une réception d'un signal de commande (5) par le biais de la première interface et, lors d'une réception d'un signal de commande (5) par le biais de la première interface (3), à former un canal de retour (6) en modulant une charge présente aux bornes de la deuxième interface (4) selon un protocole défini, ladite unité centrale (12) interprétant cette modulation de charge définie comme une transmission de signal provenant de l'appareil de commande (1), ladite première interface (3) étant une interface unidirectionnelle.

2. Appareil de commande selon une des revendications précédentes,
dans lequel la modulation de charge de la deuxième interface (4) forme le canal de retour (6) de la première interface (3) de manière que la deuxième interface (4) est une interface bidirectionnelle par l'intermédiaire de la modulation de charge.

3. Appareil de commande selon une des revendications précédentes,
dans lequel le signal de commande (5) présente, au niveau de la première interface (3) de l'unité centrale (12), au moins un paramètre de commande pour le réglage de l'appareil de commande (1).

4. Appareil de commande selon une des revendications précédentes,
dans lequel le signal de commande (5) présente, au niveau de la première interface (3) de l'unité centrale (12), au moins un paramètre de programmation pour la programmation de l'appareil de commande (1).

5. Appareil de commande selon une des revendications précédentes,
dans lequel le signal de commande (5) présente, au niveau de la première interface (3) de l'unité centrale (12), au moins une instruction de variation pour le réglage de la luminosité du moyen d'éclairage (2) raccordé à l'appareil de commande (1).

6. Appareil de commande selon une des revendications précédentes,
dans lequel le signal de commande analogique est réglé au niveau de la deuxième interface (4) au moyen d'un potentiomètre (8) de l'unité centrale (12).

7. Appareil de commande selon une des revendications précédentes,
dans lequel le signal de commande analogique de la deuxième interface (4) est détecté au moyen d'un transformateur cadencé (9) et dans lequel le signal d'horloge (10) est modulé pour réaliser la modulation de charge définie aux bornes de la deuxième interface (4).

8. Appareil de commande selon la revendication 7,
dans lequel la modulation du signal d'horloge (10) permet une transmission de données de la deuxième interface (4) à l'unité centrale (12).

9. Appareil de commande selon une des revendications précédentes,
dans lequel la première interface (3) est évaluée comme ayant une priorité supérieure à la deuxième interface (4).

10. Appareil de commande selon une des revendications précédentes,
dans lequel des données relatives au signal de commande (5) sont vérifiées au niveau de la première interface (3) dans l'appareil de commande et sont confirmées aux bornes de la deuxième interface au moyen de la modulation de charge définie.

11. Appareil de commande selon une des revendications précédentes,
dans lequel la deuxième interface (4) est isolée galvaniquement de la première interface (3).

12. Système de configuration et/ou de commande d'un appareil de commande selon une des revendications précédentes, présentant l'unité centrale (12) et au moins l'appareil de commande (1) selon une des revendications précédentes, auquel un actionneur, de préférence un moyen d'éclairage (2), est raccordé, ledit appareil de commande (1) étant relié à l'unité centrale (12).

13. Système selon la revendication 12,
dans lequel l'unité centrale (12) commande une pluralité d'appareils de commande (1, 1', 1") selon une des revendications 1 à 11.

14. Système selon la revendication 13,
dans lequel l'unité centrale (12) envoie un signal de commande (5) à la première interface (3, 3', 3") de l'au moins un appareil de commande (1, 1', 1") sous forme de signal de déphasage en début ou en fin de cycle de la tension d'alimentation du réseau par le biais d'une conduite d'alimentation secteur, et
dans lequel l'unité centrale (12) est destinée à évaluer les bornes de la deuxième interface (4, 4', 4") de l'appareil de commande (1, 1', 1") respectif dont la charge a été modulée de manière définie.
